# EUROPEAN PATENT SPECIFICATION

(11) **EP 2 699 398 B1**
(45) Date of publication and mention of the grant of the patent: **25.10.2017**
(21) Application number: 12774238.5
(22) Date of filing: 04.04.2012
(51) Int. Cl.: B28C 5/00

(54) **CEMENTITIOUS ADHESIVE DELIVERY AND APPLICATION METHOD AND SYSTEM**
VERFAHREN UND SYSTEM ZUR ABGABE UND ANWENDUNG EINES ZEMENTARTIGEN HAFTSTOFFS
PROCÉDE ET SYSTÈME DE DISTRIBUTION ET D'APPLICATION D'ADHÉSIF CIMENTAIRE

(30) Priority: 20.04.2011 US 201113066642
(43) Date of publication of application: 26.02.2014
(73) Proprietor: Innovative Mortar Solutions, S.A.P.I. De C.V., San Pedro Garza Garcia N.L. (MX)
(72) Inventor: URETA MORALES, Hector, San Pedro Garza Garcia N.L. (MX); SEGOVIA GONZALES, Juan, San Pedro Garza Garcia N.L. (MX); PEREZ TREJO, Luis, Monterrey N.L. (MX)
(74) Representative: Tomkins & Co
(86) International application number: PCT/IB2012/000695
(87) International publication number: WO 2012/143768

(56) References cited:
- WO-A1-2007/052328
- FR-A1- 2 656 360
- JP-A- H08 244 798
- US-A- 3 419 258
- US-A- 3 815 794
- US-A- 3 819 107
- US-A- 4 163 509
- US-A- 4 487 529
- US-A- 4 952 068
- US-A- 5 618 105
- US-A1- 2010 072 224

## Description

### FIELD OF INVENTION

The present invention relates in general to masonry, masonry practices, and a process of preparing and applying the material needed for bonding together pieces of masonry such as blocks, bricks, pavers and other masonry elements.

### BACKGROUND OF INVENTION

Masonry mortar has been used to bond together wall components since ancient times. The building practice has traditionally proceeded with application of an adhesive - the most common being cement, sand and water mortar - over a surface of a masonry piece, such as block, in order to join pieces together. Current concrete block building practices need around 40% of block weight - around 16.80kg (15 pounds) per unit - as additional materials (e.g. cement, sand, water) to adhere the pieces together. US-A-3,819,107 discloses a known prior art corresponding to the preamble of the independent claims.

This substantial amount of material must be jobsite prepared to assure adherence and workability. Raw materials must be stored and kept safe of deteriorating agents such as water acting on cement. Sand is usually kept as bulk and usually fed with a shovel to a mechanical mixer. Masonry or Portland cement and water must be added to the mixer. Cement is usually handled in paper bags that will be opened, fed to the mixer and be ready to be disposed. Clean, fresh water must be transported to the jobsite in a substantial amount - around 1.27kg (2.8 lbs) per piece of block - and must be transported and fed into the mixer. Once the material is hydrated and mixed, it must be transported to the mason who is in charge of applying it on the wall, this is done with the aid of a wheelbarrow and a bucket or similar container. Usually this fresh mortar is transferred with a shovel to a series of mortar trays along the wall to be ready and close to the mason as he advancing along the wall laying a line of blocks. Application of the material over the piece is most often done with a hand trowel. An amount of material is placed over the upper and vertical sides of the piece and in the process of leveling a substantial amount of excess material is squeezed out and in of the joint and most of the times this material is wasted. Excess material which drops at the base of the wall must be collected and handled out of the jobsite as scrap. After completion, all tools and accessories used in the process must be cleaned, all mortar crusts scrapped from all surfaces that went into contact with the mortar, and this activity must be done preferably the same day while the material is still soft.

The required overall effort, tools, time consumed and waste represent an important part of the whole wall building processes cost and time. Many professional construction contractors must deal on their daily activities with the inherent complexity of the process that has been described. However, there is another important group that must deal with this complexity with far less knowledge and professional tools that are required. The Do-It-Yourself consumers are engulfed with mainly the same complexities, tools and cleaning activities that should be accomplished even for a small family yard project.

### SUMMARY OF INVENTION

The principles of the present invention are embodied in a masonry method for adhering together first and second structures includes loading a dry adhesive into a bag and sealing the bag closed. After transport to a jobsite, a portion of a tip of the bag is cut to provide an orifice in preparation to apply the adhesive. Liquid is introduced into the bag through the orifice and the liquid and the dry adhesive are mixed within the bag to produce hydrated adhesive. The hydrated adhesive is squeezed from an orifice though the bag onto a surface of a selected one of the first and second structures.

According to another embodiment of the inventive principles, a method is disclosed for applying masonry adhesive. The masonry method for adhering together first and second structures comprises:
loading a dry adhesive into a bag, the bag including a triangular-shaped tip section, a conical section, and a neck section disposed between the tip section and the conical section and dimensioned to allow folding of the triangular tip section towards the conical section during mixing of contents within the bag, wherein the triangular-shaped tip section includes a sidewall continuously narrowing from a bag tip towards the neck section and dimensioned to allow cutting of a first orifice into the flexible bag at a point between the bag tip and the neck section sufficient for the introduction of a liquid and the conical section includes a sidewall continuously narrowing from a main body of the flexible bag towards the neck section and dimensioned to allow cutting of a second orifice at a point between the main body and the neck section dimensioned to produce a desired flow of hydrated adhesive out of the bag when the bag is squeezed;
sealing the bag closed;
cutting the first orifice through the triangular-shaped tip section;
introducing liquid into the bag through the first orifice;
mixing the liquid and the dry adhesive within the bag, wherein the dry adhesive includes an additive for producing an adhesive paste with a flowing texture that can be squeezed out of the flexible bag when hydrated with the liquid;
cutting the second orifice through the conical section of the bag; and
squeezing the adhesive paste from the second orifice onto a surface of a selected one of the first and second structures, wherein a geometry of the conical section and the flowing texture of the adhesive paste produce a substantially continuous, substantially cylindrical body of the adhesive paste through the second orifice.

A bag is disclosed for delivery of a cementious adhesive material. The bag includes a flexible base section for holding cementitious adhesive material, the base section including a conical portion including an area adapted for cutting to open an aperture dimensioned to allow a corresponding amount of hydrated adhesive material to be forced out of the base section when hand pressure is applied. The bag also includes a tip-section adapted for cutting to provide an aperture for allowing liquid to be introduced into the base section, the tip-section communicating with the base section through a neck section, wherein the tip-section and the neck-section are adapted for folding-over to allow hand mixing of liquid and dry cementitious adhesive within the base section.

The principles of the present invention offer numerous advantages versus the prior art. Among other things, a small, self contained unit 100 is provided to control, transport and deliver cementitious masonry adhesive to adhere masonry elements together - versus dealing with larger and more difficult to handle bulk materials such as the case of sand in the traditional process. Additionally, system 100 provides a package that in itself is an integrated solution for masonry cementitious adhesive uses, the package becoming a mixer and application tool - versus a variety of tools needed for transporting, preparing and applying mortars for this use. The present principles also provide a new building system for adhering masonry elements, where less resources are needed including labor, materials, tooling, knowledge, cost and time. Furthermore, the embodiments of the present invention provide a convenient solution for do-it-yourselfers, since they lower the complexity and the knowledge needed to deal with traditional mortar solutions for home and small projects. A greener solution is provided versus traditional mortar processes since less materials are needed, and consequently less quarrying, crushing, transporting, waste levels, and scrap disposal. Finally, a higher quality of the adhesive mix is produced due to in plant manufacturing quality control - versus jobsite measuring out and preparation of the mix.

### BRIEF DESCRIPTION OF DRAWINGS

For a more complete understanding of the present invention, and the advantages thereof, reference is now made to the following descriptions taken in conjunction with the accompanying drawings, in which:
FIGURE 1 is a diagram of a representative cementitious adhesive delivery and application system embodying the principles of the present invention;
FIGURE 2 is a diagram of the system of FIGURE 1 in which a cut has been made at the top of the bag allowing for the introduction of liquid;
FIGURE 3 illustrates the introduction of liquid into the bag;
FIGURE 4 illustrates the mixing of Concentrated Cementitious Adhesive (CCA) with liquid within the bag;
FIGURE 5 is a more detailed diagram of the neck portion of the bag, which allows the user to selectively cut the bag neck and thereby vary the width of the CCA application orifice; and
FIGURE 6 is a diagram showing a typical use of the CCA application and delivery system embodying the principles of the present invention.

### DETAILED DESCRIPTION OF THE INVENTION

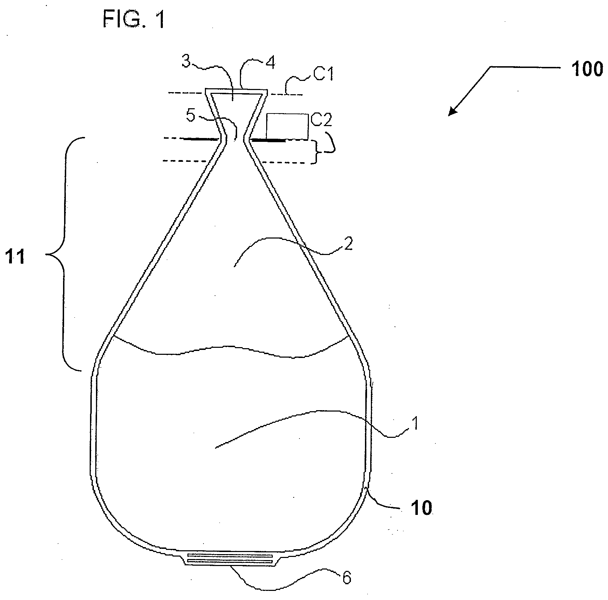

The principles of the present invention and their advantages are best understood by referring to the illustrated embodiment depicted in FIGURES 1 - 6 of the drawings, in which like numbers designate like parts.

FIGURE 1 is a diagram of an exemplary Concentrated Cementitious Adhesive (CCA) delivery and application system 100 embodying the principles of the present invention. Generally, system 100 comprises a new package that contains a factory-loaded Concentrated Cementitious Adhesive (CCA) for delivery to a construction site or home project for use in all masonry activities that involve adhering masonry elements together, such as the construction of walls, pavements, paneling and so on. Due to its versatility, a paste like texture and superior performance embodied in a practical flexible device, system 100 could also be used to fill up any undesired cavities in the masonry job or make repairs on cracks or imperfections that the masonry units or the job itself may present.

In the preferred embodiment, CCA is a Polymer Modified Portland Cement Mortar known in the art. Polymers bring more strength and flexural efforts resistance to cement bonds between sand grains than the traditional cement bonds. This allows for a mixture which has a concentrated adhering performance. CCA includes also additives that allow the mix to perform as a paste, which brings workability characteristics such as a flowing texture that allows the mix to be squeezed out of the bag and form a firm cylindrical bed over the piece to be bonded. Another set of additives allow for the mix density and to keep the mentioned characteristics of workability during a certain period of time - around 90 minutes. This retardant effect inhibits the chemical reactions that take place in the setting of cement and allows for a longer usable working cycle of the mix.

In alternate embodiments, the system shown in FIGURE 1 may be used with, for example, tile adhering mortars if adhering strength and workability attributes are calibrated adequately. Additional possible Portland cement alternatives include blast furnace cement, fly ash cement, pozzolan cement, silica fume cement, white blend cements, and colored cements, among other Portland cements. Other cement varieties that could be used in the mix, with proper calibration and testing, include pozzolan-lime cement, slag-lime cement, supersulfonated cement, calcium aluminate cement, calcium sulfoaluminate cement, natural cement, geopolymer cement, among others.

System 100 includes a bag 10, which preferably is a semi-cone shaped plastic container that contains factory-loaded CCA as a powder 1 and air 2. The top of the bag 10 is a segment of an inverted triangle having a closed or sealed top 4. Where the cone shape geometry 1 1 of the main body of bag 10 meets the inverted triangle segment 3 a neck is formed in area 5. When filled with material, bag 10 can stand up using plastic seal 6 as a base.

Bag 10 could be fabricated, for example, using a biodegradable two-layer film system such as a 500 microns polyethylene film plus a polyester support film or a several component co-extruded high vacuum plastic film could also be used. Other flexible materials could be used to fabricate the bag, if hermetic to water penetration, flexible, strong enough to keep the mix enclosed, allow for easy cuts in the upper section of the bag and endure the pressures that are produced in the hand mixing process. Also if a bag full of material drops in the ground by accident, the bag should be capable of withstanding rock and other types of punctures.

Bags 10 are transported and warehoused at the jobsite. Since all needed materials are already contained and protected from contaminating elements, system 100 become an inventory kit that allows the constructor to identify and control his or her materials - a feature of significant complexity in the case of bulk sand for the traditional practice.

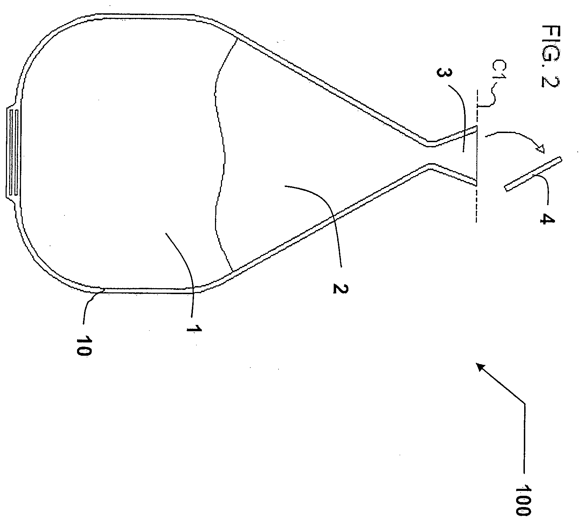

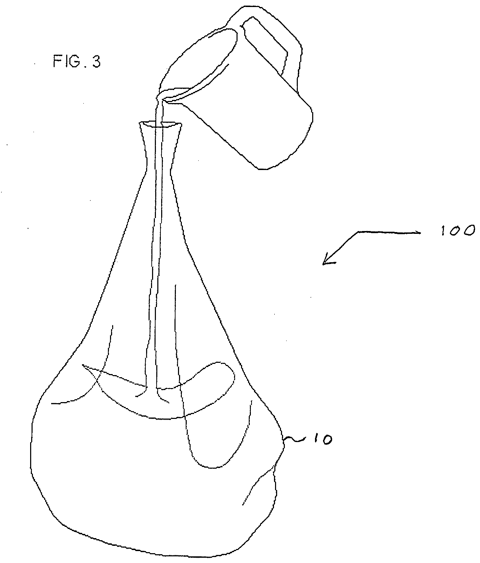

According to the principles of the present invention, to start the process of preparing the material, a cut C1 is made at 4 the top of bag 10 to get an open orifice as shown in FIGURE 2. Liquid is poured in through the resulting orifice in the amount needed to get a workable consistency of the mix, as shown in FIGURE 3. This liquid could be composed primarily of water but it may contain other elements that could improve the mix characteristics for certain weather or jobsite conditions such as extreme temperatures, wind velocity and other adverse elements. Liquid characteristics could also be changed to control other aesthetic attributes such as coloring the mix to match with masonry unit colors. Also through the liquid, various additional performance attributes could be incorporated to the mix, such as waterproofing, sealing, curing, fire resistant and other advantageous characteristics.

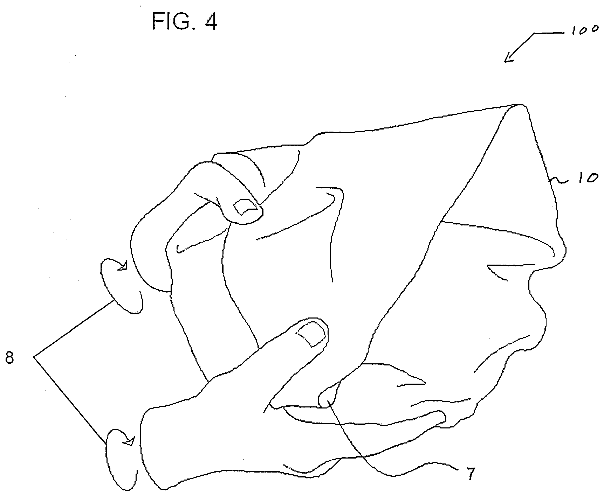

Once the CCA has been hydrated, a hand mixing process starts, as shown in FIGURE 4. The geometry of bag 10 allows region 7 of triangle 3 of the bag proximate cut C1 to be used as a manual closing mechanism. It is important to note that there is no need to for an additional closing mechanism in the bag, folding triangular section 3 of the bag near the neck 5 is sufficient to keep the material inside bag 10 during mixing process.

With bag 10 serving as a container, the user applies his or her fingers to exert repetitive outside pressures to force material to flow in different directions within the bag, as generally shown at 8. The result is a homogeneous mixed material. The mixing process typically takes no longer than between one and two minutes. The mixing process could also be improved if any alternative practice could be derived along the experience, for example, having the top section folded as explained above, and laying the bag in a flat surface and emulate the movements that a pizza or a bread baker would perform in a dough to have it mixed, or even a mechanical accessory could be used to help the user in the mixing process, being a type of rolling pin a non restrictive example of device.

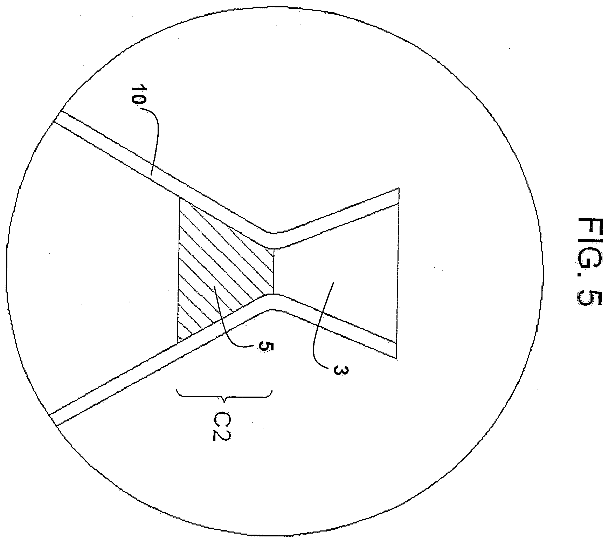

In order to get the desired diameter for the material bed that is going to be placed over the adhering surfaces, a second cut C2 is made in bag 10 as shown in FIGURE 5. Advantageously, the design of bag 10 provides a segment of continuously changing width in the region of neck 5 - preferably a funnel-like geometry - to offer a wide number of options for placing cut C2.

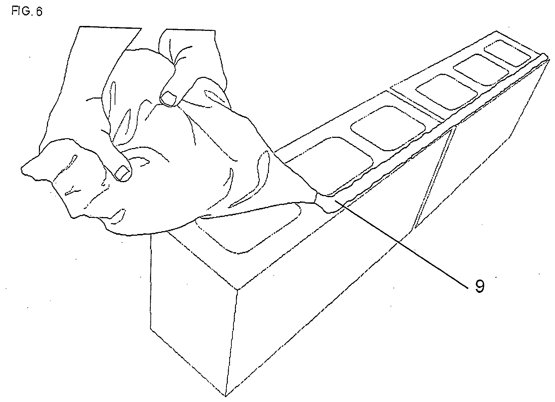

At this time bag 10 is ready to apply the now hydrated CCA over the piece surface 9 shown in FIGURE 6. In this part of the process bag 10 becomes a delivering and applying tool for the material. Advantageously the geometry of the upper side of 11 of bag 10 allows it to be used as a "pastry bag" to squeeze and channel the CCA out and form a continuous cylindrical body of material over the piece 9 surface. CCA consistency and texture is similar to a soft paste, allowing for just a small effort to push the material out of the bag. In order to force the material out of the bag, other mechanical squeezing accessories could eventually be used, being a type of tuck point gun design a non restrictive example of the type or device where the bag could be placed to be squeezed. Several accessories could eventually be used to keep the bag at hand or close to the user, being a lash of some kind to hang the bag from the user, a non restrictive example.

Since the user controls the diameter of the bed and CCA is a concentrated adhesive, it is possible to lay a significantly smaller amount of material over piece 9. In the case of concrete block, this feature is important because no excess material will flow out of the joint during the leveling process and practically no waste will be produced. This feature will also help the worker to avoid the typical spatters during the whole process of preparing and applying masonry mortars.

The following example is given to illustrate the inventive principles and not to limit the scope of the invention. Assume there is a project that includes building a wall with 145 pieces of 20.32cm (8") concrete block. The mason will need a certain amount of materials and labor to get the job done. Let us assume that the mason chooses a traditional building practice that consists on mixing masonry cement bags, mortar sand and water to produce the mix needed to bond together the blocks.

Based on costs from the Houston area at the end of 2010 and the recommended amount of materials from Allied Concrete in GA, we could summarize the project adhering materials, labor and tools needed as follows.

Adhering Materials are summarized in Table 1:

**Table 1**

| Total Traditional Way | Unit | Total | Total |
|---|---|---|---|
| | Cost | Cost | Weight (Kg) |
| 24 Masonry Cement | $9.78 | $224.50 | 1,088.62 (2,400.00lb) |
| 4,535.92 Kg (5 Tons) Mortar Sand | $20.59 | $102.97 | 4,535.92 (10,000.00lb) |
| Water | $0.00 | $1.17 | 1,280.22 (2,822.40lb) |
| Labor (per block) | $1.65 | $1,650.00 | |
| | | | |
| Total Traditional Way | | $1,998.64 | 6,904.76 (15,222.401b) |

Time is summarized in Table 2, assuming the standard block laying speed is 125 pieces per day for a 2 masons team for the traditional cement mortar building practice. With this new method for mixing, handling and applying adhesive material over standard block, a 50% time reduction has been achieved on field testing. A total cost comparison of the results of the exemplary application of the principles of the present invention and traditional methods is summarized in Table 3.

**Table 2**

| Total CCA | Unit | Total | Total |
|---|---|---|---|
| | Cost | Cost | Weight (Kg) |
| 27.6 Bags of CCA | $18.00 | $496.80 | 140.84 (310.50lb) |
| Water | $0.00 | $0.02 | 19.28 (42.50lb) |
| Labor (50% efficiency) | $0.83 | $825.00 | |
| | | | |
| Total CCA | | $1,321.82 | 160.12 (353.00lb) |

**Table 3**

| Total, comparison | Traditional | Proposed Method | Dif |
|---|---|---|---|
| Total Costs | $1,998.64 | $1,321.82 | -33.9% |
| Total Material Weight (Kgs) | 6,904.76 (15,222.40lb) | 160.12 (353.00lb) | -97.7% |

With the traditional way, in order to mix, transport and apply the mortar over the blocks the mason would need a tool set consisting of a combination of a mechanical mixer, shovel, wheelbarrow, buckets mortar trays, and trowel. In contrast, none of these tools are needed using the new CCA building practice according to the present principles. Furthermore, traditional practice has at least 4 sources of material waste including mortar bed dropping inside the block, mortar bed squeezed out of block bed due to the leveling procedure, mortar residuals that cannot be collected in the mixing process, and residuals of sand and cement that cannot be collected from jobsite inventory. Practically the only material waste of CCA in the embodiments of the present inventive principles is the residual that cannot be squeezed out of the bag

Although the invention has been described with reference to specific embodiments, these descriptions are not meant to be construed in a limiting sense. Various modifications of the disclosed embodiments, as well as alternative embodiments of the invention, will become apparent to persons skilled in the art upon reference to the description of the invention. It should be appreciated by those skilled in the art that the conception and the specific embodiment disclosed might be readily utilized as a basis for modifying or designing other structures for carrying out the same purposes of the present invention. It should also be realized by those skilled in the art that such equivalent constructions do not depart from the scope of the invention as set forth in the appended claims.

## Claims

1. A masonry method for adhering together first and second structures comprising:
loading a dry adhesive into a bag 10, **characterized in that** the bag includes a triangular-shaped tip section 3, a conical section 11, and a neck section 5 disposed between the tip section and the conical section and dimensioned to allow folding of the triangular tip section towards the conical section during mixing of contents within the bag, wherein the triangular-shaped tip section includes a sidewall continuously narrowing from a bag tip towards the neck section and dimensioned to allow cutting of a first orifice 4 into the flexible bag at a point between the bag tip and the neck section sufficient for the introduction of a liquid and the conical section includes a sidewall continuously narrowing from a main body of the flexible bag towards the neck section and dimensioned to allow cutting of a second orifice at a point between the main body and the neck section dimensioned to produce a desired flow of hydrated adhesive out of the bag when the bag is squeezed;
sealing the bag closed;
cutting the first orifice through the triangular-shaped tip section;
introducing liquid into the bag through the first orifice;
mixing the liquid and the dry adhesive within the bag, wherein the dry adhesive includes an additive for producing an adhesive paste with a flowing texture that can be squeezed out of the flexible bag when hydrated with the liquid;
cutting the second orifice through the conical section of the bag; and
squeezing the adhesive paste from the second orifice onto a surface of a selected one of the first and second structures, wherein a geometry of the conical section and the flowing texture of the adhesive paste produce a substantially continuous, substantially cylindrical body of the adhesive paste through the second orifice.

2. The method of Claim 1, wherein mixing the liquid and the dry adhesive comprises applying manual force to the bag.

3. The method of Claim 1, further comprising folding over the triangular-shaped tip section of the bag during mixing.

4. The method of Claim 1, wherein loading a dry adhesive into the bag and sealing the bag are performed at a factory.

5. A system 100 for applying masonry adhesive comprising a flexible bag 10 and a dry cementitious adhesive sealed within the flexible bag, **characterized in that**:
the flexible bag 10 has a triangular-shaped tip section 3, a conical section 11, and a neck section 5 disposed between the tip section and the conical section and dimensioned to allow folding of the triangular tip section towards the conical section during mixing of contents within the bag, wherein the triangular-shaped tip section includes a sidewall continuously narrowing from a bag tip towards the neck section and dimensioned to allow cutting of an orifice 4 into the flexible bag at a point between the bag tip and the neck section sufficient for the introduction of a liquid and the conical section includes a sidewall continuously narrowing from a main body of the flexible bag towards the neck section and dimensioned to allow cutting of another orifice at a point between the main body and the neck section dimensioned to produce a desired flow of adhesive paste out of the bag during use of the system; and
the dry cementitious adhesive disposed within the bag, wherein the bag is sealed after the dry adhesive is loaded into the bag during fabrication of the system including an additive for producing an adhesive paste with a flowing texture that can be squeezed out of the flexible bag when hydrated with the liquid, wherein a geometry of the conical section and the flowing texture of the adhesive paste produce a substantially continuous, substantially cylindrical body of the adhesive paste through the another orifice when pressure is applied to the flexible bag.

6. The system of Claim 5, wherein the flexible bag is formed of a layer of plastic.

7. The system of Claim 5, wherein the flexible bag further includes a rounded section contiguous with the conical section for holding a portion of the dry adhesive prior to introduction of the liquid and a portion of the hydrated adhesive after introduction of the liquid.

8. The system of Claim 7, wherein the bag further comprises a seal at an end of the rounded section, the seal providing a base for standing the bag.

9. The system of Claim 5, wherein the triangular-shaped tip section is formed of a material allowing an opening of an orifice into the flexible bag for the introduction of liquid to be created by cutting.

10. The system of Claim 7, wherein the rounded section is formed of a flexible material allowing manual manipulation of materials within the flexible bag.

11. The system of Claim 5, wherein at least one of the triangular-shaped tip section, the conical section, and the neck section of the flexible bag is formed of a biodegradable material.

## Patentansprüche

1. Ein Maurerverfahren zum Verbinden erster und zweiter Strukturen mit den Schritten:
Einfüllen eines aushärtenden Klebers in einen Beutel 10, **dadurch gekennzeichnet, dass** der Beutel einen dreieckig geformten Spitzenbereich 3, einen konischen Bereich 11 und Halsbereich 5 aufweist, der zwischen dem Spitzenbereich und dem konischen Bereich angeordnet und so dimensioniert ist, dass der dreieckige Spitzenbereich während des Mischens des Beutelinhalts in Richtung des konischen Bereichs gefaltet werden kann, wobei der dreieckig geformte Spitzenbereich eine Seitenwand aufweist, die sich von einer Beutelspitze zum Halsbereich kontinuierlich verjüngt und so dimensioniert ist, dass an einer Stelle zwischen der Beutelspitze und dem Halsbereich eine erste Öffnung 4, die zum Einführen einer Flüssigkeit ausreicht, in den flexiblen Beutel geschnitten werden kann und der konische Bereich eine Seitenwand aufweist, die sich von einem Hauptkörper des flexiblen Beutels zum Halsbereich kontinuierlich verjüngt und so dimensioniert ist, dass an einer Stelle zwischen dem Hauptkörper und dem Halsbereich eine zweite Öffnung geschnitten werden kann, die so dimensioniert ist, dass, wenn der Beutel gedrückt wird, ein erwünschter Fluss an abgebundenem Klebstoff aus dem Beutel erzeugt wird,
dichtes Verschließen des Beutels,
Schneiden der ersten Öffnung durch den dreieckig geformten Spitzenbereich,
Einführen von Flüssigkeit in den Beutel durch die erste Öffnung,
Mischen der Flüssigkeit und des aushärtenden Klebers im Beutel, wobei der aushärtende Kleber einen Zusatz zur Herstellung einer Klebepaste mit einer Fließstruktur aufweist, die nach Abbinden mit der Flüssigkeit aus dem flexiblen Beutel gedrückt werden kann,
Schneiden der zweiten Öffnung durch den konischen Bereich des Beutels und
Drücken der Klebepaste aus der zweiten Öffnung auf eine Oberfläche einer bestimmten der ersten und zweiten Strukturen, wobei eine Geometrie des konischen Bereichs und die Fließstruktur der Klebepaste einen im Wesentlichen kontinuierlichen, im Wesentlichen zylindrischen Körper der Klebepaste durch die zweite Öffnung erzeugen.

2. Verfahren nach Anspruch 1, wobei das Mischen der Flüssigkeit und des aushärtenden Klebers die Anwendung einer manuellen Kraft auf den Beutel umfasst.

3. Verfahren nach Anspruch 1, ferner mit dem Schritt des Umfaltens des dreieckig geformten Spitzenbereichs des Beutels während des Mischens.

4. Verfahren nach Anspruch 1, wobei das Befüllen des Beutels mit einem aushärtenden Kleber und das dichte Verschließen des Beutels in einer Fabrik durchgeführt werden.

5. System 100 zum Aufbringen von Maurerklebstoff mit einem flexiblen Beutel 10 und einem im flexiblen Beutel hermetisch eingeschlossenen trockenen zementartigen Klebstoff, **dadurch gekennzeichnet, dass**:
der flexible Beutel 10 einen dreieckig geformten Spitzenbereich 3, einen konischen Bereich 11 und Halsbereich 5 aufweist, der zwischen dem Spitzenbereich und dem konischen Bereich angeordnet und so dimensioniert ist, dass der dreieckige Spitzenbereich während des Mischens des Beutelinhalts in Richtung des konischen Bereichs gefaltet werden kann, wobei der dreieckig geformte Spitzenbereich eine Seitenwand aufweist, die sich von einer Beutelspitze zum Halsbereich kontinuierlich verjüngt und so dimensioniert ist, dass an einer Stelle zwischen der Beutelspitze und dem Halsbereich eine erste Öffnung 4, die zum Einführen einer Flüssigkeit ausreicht, in den flexiblen Beutel geschnitten werden kann und der konische Bereich eine Seitenwand aufweist, die sich von einem Hauptkörper des flexiblen Beutels zum Halsbereich kontinuierlich verjüngt und so dimensioniert ist, dass an einer Stelle zwischen dem Hauptkörper und dem Halsbereich eine weitere Öffnung geschnitten werden kann, die so dimensioniert ist, dass während der Verwendung des Systems ein erwünschter Fluss an abgebundenem Klebstoff aus dem Beutel erzeugt wird, und
der aushärtende zementartige Klebstoff sich im Beutel befindet, wobei der Beutel nach dem Einfüllen des aushärtenden Klebstoffs in den Beutel während der Herstellung des Systems zusammen mit einem Zusatzstoff zur Herstellung einer Klebepaste mit einer Fließstruktur, die nach Abbinden mit der Flüssigkeit aus dem flexiblen Beutel gedrückt werden kann, dicht verschlossen wird, wobei eine Geometrie des konischen Bereichs und die Fließstruktur der Klebepaste einen im Wesentlichen kontinuierlichen, im Wesentlichen zylinderförmigen Klebepastenkörper durch die andere Öffnung herstellen, wenn Druck auf den flexiblen Beutel ausgeübt wird.

6. System nach Anspruch 5, wobei der flexible Beutel aus einer Kunststoffschicht besteht.

7. System nach Anspruch 5, wobei der flexible Beutel des Weiteren einen gerundeten Bereich benachbart zum konischen Bereich aufweist zum Halten eines Teils des aushärtenden Klebstoffs vor der Flüssigkeitszufuhr und eines Teils des aushärtenden Klebstoffs nach der Flüssigkeitszufuhr.

8. System nach Anspruch 7, wobei der Beutel an einem Ende des gerundeten Bereichs ferner eine Dichtung aufweist, wobei die Dichtung eine Basis zum Aufstellen des Beutels bereitstellt.

9. System nach Anspruch 5, wobei der dreieckig geformte Spitzenbereich aus einem Material besteht, das das Bilden einer Öffnung im flexiblen Beutel zur Flüssigkeitszufuhr durch Einschneiden gestattet.

10. System nach Anspruch 7, wobei der gerundete Bereich aus einem flexiblen Material besteht, das eine manuelle Verarbeitung der Materialien im flexiblen Beutel gestattet.

11. System nach Anspruch 5, wobei der dreieckig geformte Spitzenbereich, der konische Bereich und/oder der Halsbereich des flexiblen Beutels aus einem biologisch abbaubaren Material besteht/bestehen.

## Revendications

1. Procédé de maçonnerie pour faire adhérer ensemble des première et deuxième structures comprenant :
charger un adhésif sec dans un sac 10, **caractérisé en ce que** le sac comprend une section de pointe de forme triangulaire 3, une section conique 11, une section de col 5 disposée entre la section de pointe et la section conique et dimensionnée pour permettre le pliage de la section de pointe triangulaire en direction de la section conique pendant le mélange d'un contenu se trouvant dans le sac, dans lequel la section de pointe de forme triangulaire comprend une paroi latérale se rétrécissant de façon continue à partir d'une pointe de sac en direction d'une section de col et dimensionnée pour permettre la découpe d'un premier orifice 4 dans le sac flexible à un point situé entre la pointe du sac et la section de col, suffisant pour l'introduction d'un liquide, et la section conique comprend une paroi latérale se rétrécissant de façon continue à partir d'un corps principal du sac flexible en direction de la section de col et dimensionnée pour permettre la découpe d'un deuxième orifice à un point situé entre le corps principal et la section de col, dimensionné pour laisser sortir un flux souhaité d'adhésif hydraté hors du sac lorsque le sac est pressé ;
fermer le sac de façon étanche ;
découper le premier orifice dans la section de pointe de forme triangulaire ;
introduire un liquide dans le sac par le premier orifice ;
mélanger le liquide et l'adhésif sec dans le sac, l'adhésif sec comprenant un additif pour produire une pâte adhésive ayant une texture d'écoulement qui peut être pressée hors du sac flexible lorsqu'elle est hydratée avec le liquide ;
découper le deuxième orifice dans la section conique du sac ; et
presser la pâte adhésive à partir du deuxième orifice sur une surface de l'une sélectionnée des première et deuxième structures, la géométrie de la section conique et la texture d'écoulement de la pâte adhésive produisant un corps sensiblement cylindrique sensiblement continu de la pâte adhésive à travers le deuxième orifice.

2. Procédé selon la revendication 1, dans lequel le mélange du liquide et de l'adhésif sec comprend l'application d'une force manuelle au sac.

3. Procédé selon la revendication 1, comprenant en outre de replier la section de pointe de forme triangulaire du sac pendant le mélange.

4. Procédé selon la revendication 1, dans lequel le chargement d'un adhésif sec dans le sac et la fermeture étanche du sac sont réalisés en usine.

5. Système 100 pour appliquer un adhésif de maçonnerie comprenant un sac flexible 10 et un adhésif cimentaire sec enfermé de façon étanche dans le sac flexible, **caractérisé en ce que** :
le sac flexible 10 comporte une section de pointe de forme triangulaire 3, une section conique 11, une section de col 5 disposée entre la section de pointe et la section conique et dimensionnée pour permettre le pliage de la section de pointe triangulaire en direction de la section conique pendant le mélange d'un contenu se trouvant dans le sac, dans lequel la section de pointe de forme triangulaire comprend une paroi latérale se rétrécissant de façon continue à partir d'une pointe de sac en direction d'une section de col et dimensionnée pour permettre la découpe d'un premier orifice 4 dans le sac flexible à un point situé entre la pointe du sac et la section de col, suffisant pour l'introduction d'un liquide, et la section conique comprend une paroi latérale se rétrécissant de façon continue à partir d'un corps principal du sac flexible en direction de la section de col et dimensionnée pour permettre la découpe d'un autre orifice à un point situé entre le corps principal et la section de col, dimensionné pour faire sortir un flux souhaité d'adhésif hydraté hors du sac pendant l'utilisation du système ; et
l'adhésif cimentaire sec disposé dans le sac, le sac étant fermé de façon étanche après que l'adhésif sec a été chargé dans le sac pendant la fabrication du système, comprenant un additif pour produire une pâte adhésive ayant une texture d'écoulement qui peut être pressée hors du sac flexible lorsqu'elle est hydratée avec le liquide, la géométrie de la section conique et la texture d'écoulement de la pâte adhésive produisant un corps sensiblement cylindrique sensiblement continu de la pâte adhésive à travers l'autre orifice lorsqu'une pression est appliquée au sac flexible.

6. Système selon la revendication 5, dans lequel le sac flexible est constitué d'une couche de plastique.

7. Système selon la revendication 5, dans lequel le sac flexible comprend en outre une section arrondie contiguë avec la section conique pour maintenir une portion de l'adhésif sec avant l'introduction du liquide et une portion de l'adhésif hydraté après l'introduction du liquide.

8. Système selon la revendication 7, dans lequel le sac comprend en outre une fermeture étanche au niveau d'une extrémité de la section arrondie, la fermeture étanche assurant une base pour tenir le sac debout.

9. Système selon la revendication 5, dans lequel la section de pointe de forme triangulaire a la forme d'un matériau permettant l'ouverture d'un orifice dans le sac flexible pour l'introduction d'un liquide, à créer par découpe.

10. Système selon la revendication 7, dans lequel la section arrondie est constituée d'un matériau flexible permettant une manipulation manuelle de matériaux dans le sac flexible.

11. Système selon la revendication 5, dans lequel au moins l'une de la section de pointe de forme triangulaire, de la section conique et de la section de col du sac flexible est constituée d'un matériau biodégradable.
